# EUROPEAN PATENT SPECIFICATION

(11) **EP 2 569 105 B1**
(45) Date of publication and mention of the grant of the patent: **31.05.2017**
(21) Application number: 11718617.1
(22) Date of filing: 27.04.2011
(51) Int. Cl.: B21B 31/07, F16C 33/74, F16J 15/32, F16J 15/40

(54) **NECK SEAL AND BEARING FOR A ROLLING MILL OIL FILM BEARING WITH SPACED IMPELLERS FOR PROPELLING OIL COMING OUT FROM THE BEARING'S SLEEVE AND BUSHING ; USE OF SUCH SEAL IN A ROLLING MILL OIL FILM BEARING**
HALSVERSIEGELUNG UND EIN LAGER FÜR EIN WALZWERKÖLFILMLAGER MIT DISTANZIERTEN IMPELLERN FÜR DEN ANTRIEB VON ÖL AUS DER LAGERBUCHSE ; VERWENDUNG EINER SOLCHEN HALSVERSIEGELUNG IN EINEM WALZWERKÖLFILMLAGER
JOINT ET ROULEMENT POUR UN ROULEMENT DE TRAIN DE LAMINAGE A FILM D'HUILE AVEC DES HELICES ESPACÉES POUR PROPULSER L'HUILE HORS DU ROULEMENT ; UTILISATION D'UN TEL JOINT DANS UN ROULEMENT DE TRAIN DE LAMINAGE A FILM D'HUILE

(30) Priority: 11.05.2010 US 777362
(43) Date of publication of application: 20.03.2013
(73) Proprietor: Primetals Technologies USA LLC, Alpharetta, GA 30005 (US)
(72) Inventor: WOJTKOWSKI, JR., Thomas C., Shrewsbury, Massachusetts 01545 (US); OSGOOD, Peter N., Westborough, Massachusetts 01581 (US)
(74) Representative: Metals@Linz
(86) International application number: PCT/US2011/034110
(87) International publication number: WO 2011/142968

(56) References cited:
- DE-A1-102008 006 626
- US-A- 4 071 255
- US-A- 4 808 012
- US-A- 4 819 949
- US-A- 5 511 886

## Description

### BACKGROUND OF THE INVENTION

### 1. Field of the Invention

This invention relates to a seal and a bearing for use in rolling mill oil film bearings according to the preamble of claim 1 and to the use of a seal according to the preamble of claim 7 (see, for example, US4 071 255), to remove laminar flows of oil exiting tangentially from between the rotating sleeves and the stationary bushings surrounding the sleeves.

### 2. Description of the Prior Art

In a typical rolling mill oil film bearing, a sleeve surrounds and is rotatable with a roll neck. The sleeve is journalled for rotation within a fixed bushing contained in a chock. The sleeve and bushing are dimensioned to define a gap therebetween. During operation, oil is introduced continuously into the gap where it is rotatably urged into a hydrodynamically maintained film between the sleeve and bushing at the load zone of the bearing. Laminar flows of oil exit tangentially from each end of the bearing into sumps from which the oil is removed by gravity for filtering and cooling before being recirculated back to the bearings.

A drawback of this arrangement is that large diameter drain lines are required to accommodate the gravity flow of oil exiting from the bearings. These drain lines occupy an inordinate amount of exterior space and thus contribute disadvantageously to the overall size of the bearing. Care must also be taken to insure that the drain lines are properly installed with pitches designed to prevent oil from backing up into and flooding the bearing sumps.

### SUMMARY OF THE INVENTION

In an improved system described in a copending application, the kinetic energy of rotating bearing components is employed to pump oil out of the bearings. Because the oil is forcibly expelled, smaller drain lines may be employed to handle the exiting oil flow, without the need to maintain the drain pitches required to accommodate gravity flow.

The present invention defines a seal and bearing according to claim 1 and the use of a seal in a rolling mill oil film bearing according to claim 7. The neck seal coacts with other bearing components to define an annular chamber arranged to receive the laminar flow of oil exiting from between the sleeve and bushing. The annular chamber has a tangential outlet, and the oil is rotatively driven around the chamber and out through the outlet by impellers carried by the neck seal.

These and other features and advantages of the present invention will now be described in further detail with reference to the accompanying drawings, wherein:

### BRIEF DESCRIPTION OF THE DRAWINGS

Figure 1 is a cross sectional view through a rolling mill oil film bearing embodying a neck seal in accordance with the present invention;
Figure 2 is an enlarged view of the circled area marked "A" in Figure 1;

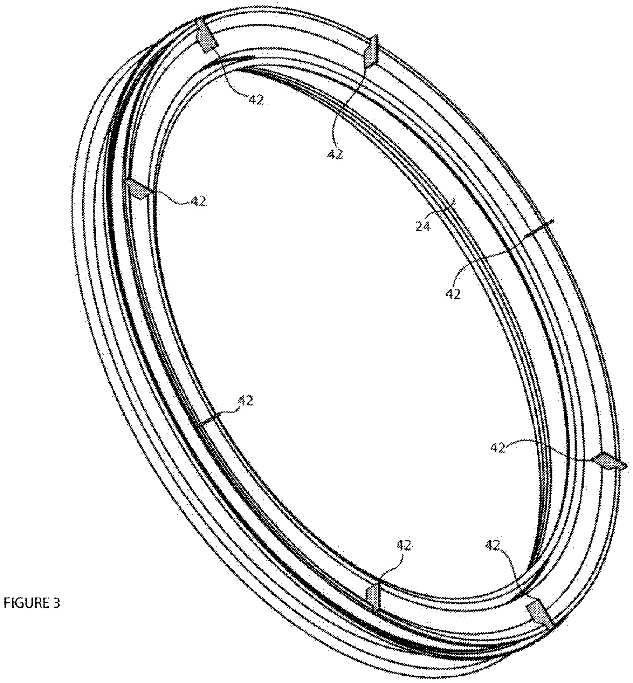

Figure 3 is a perspective view of the neck seal shown in Figures 1 and 2;
Figure 4 is a view of the outboard side of the neck seal; and
Figure 5 is a cross sectional view taken through the seal end plate extension.

### DETAILED DESCRIPTION

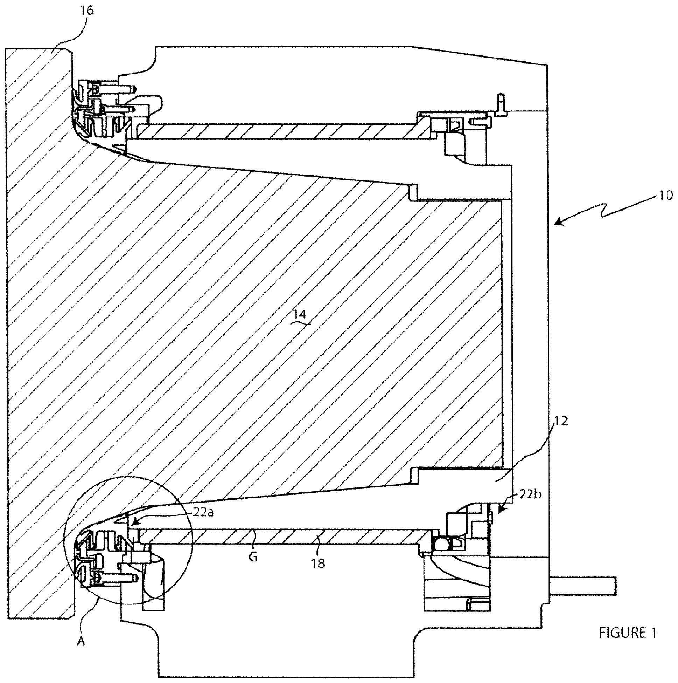

With reference initially to Figure 1, a rolling mill oil film bearing is generally indicated at 10. The bearing includes a sleeve 12 fixed to the tapered neck 14 of a roll 16. The sleeve is journalled for rotation in a fixed bushing 18 contained within a chock 20. The sleeve and bushing are dimensioned to define a gap "G" therebetween. During operation, oil is introduced continuously into the gap where it is rotationally urged by the sleeve into a hydrodynamically maintained film between the sleeve and bushing at the load zone of the bearing. Laminar flows of oil exit tangentially from opposite ends of the bearing.

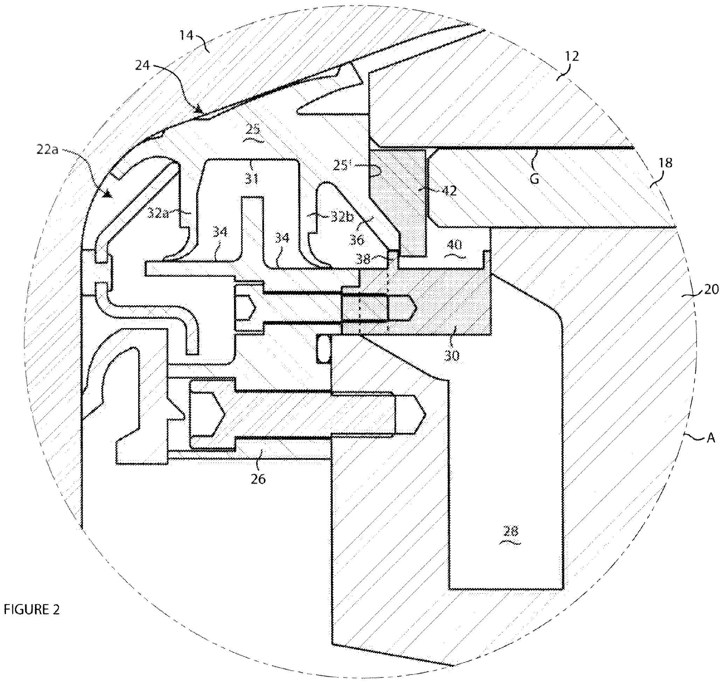

Seal assemblies 22a, 22b are located respectively at the inboard and outboard ends of the bearing. With additional reference to Figure 2, it will be seen that the inboard seal assembly 22a includes a flexible and resilient neck seal 24 in accordance with the present invention. The neck seal includes a flexible circular seal body 25 mounted on the tapered roll neck section 14 for rotation therewith along with the sleeve 12. The neck seal is surrounded by a seal end plate 26 fixed to the chock 20. A circular extension 30 spans a gap between the seal end plate 26 and the chock 20.

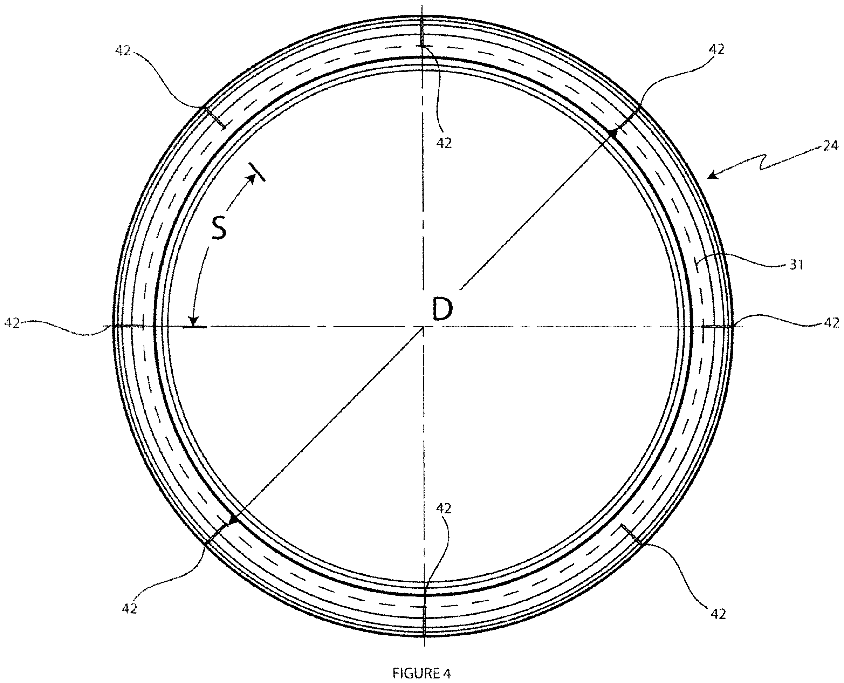

Axially spaced flanges 32a, 32b project radially outwardly from opposite ends of a cylindrical surface 31 on the neck seal body 25. The flanges 32a, 32b sealingly contact shoulders 34 on the seal end plate. An annular flinger 36 on the neck seal sealing contacts a circular shoulder 38 on extension 30. The flinger projects from the seal body at an obtuse angle with respect to an outboard end face 25' of the seal body, and at an acute angle with respect to flange 32b. Confinement surfaces provided by the flinger 36, extension 30 and chock 20 cooperate with the sleeve 12 and bushing 18 to define an annular inboard chamber 40 isolated from a sump 28 and arranged to receive the laminar flow of oil exiting tangentially from the gap G between the sleeve and bushing. Impellers 42 project into the chamber 40 from the seal body 25 at the juncture of the flinger 36 and the end face 25'. As can be best seen by additional reference to Figure 4, the impellers 42 are spaced around the circumference of neck seal 24, with the spacing "s" between the impellers being between about 4.9 to 39.3% of the outside diameter "D" of the seal body as measured at cylindrical surface 31.

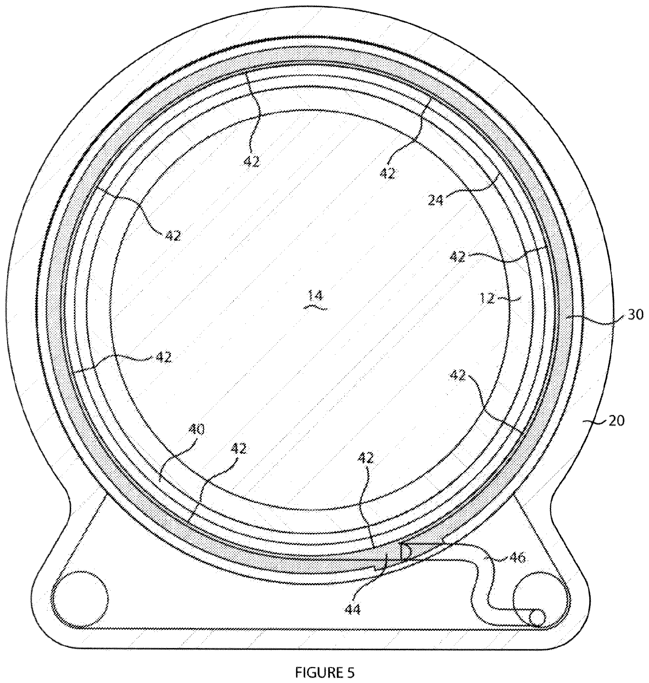

As shown in Figure 5, the extension 30 includes an outlet 44 communicating tangentially with the annular chamber 40. A hose 46 is connected to the outlet 44 and leads to the exterior of the bearing for connection to a conventional mill lubrication system (not shown).

The outlet 44 is sized with respect to the volume of oil being received in the annular chamber 40 such that during steady state operation, that chamber remains filled with oil. As noted previously, both the seal 24 and sleeve 12 are mounted on and rotate with the roll neck 14. Thus, the impellers 42 carried by the seal 24 rotate with and at the velocity of the sleeve. In the cross sectional area of the annular chamber 40 spanned by the impellers 42, the oil is rotatively propelled at the velocity of the sleeve, thus serving to efficiently pump the oil around chamber 40 and out through the outlet 44.

It thus will be seen that the impellers 42 serve to harness the rotating kinetic energy of the neck seal 24 to exert a pumping action which forcibly ejects oil from the annular chamber 40. As noted above, by forcibly ejecting oil rather than relying on gravity flow, smaller diameter drain lines may be employed and strategically positioned without regard to the maintenance of gravity pitches.

## Claims

1. A seal and a bearing (10) for use in a rolling mill oil film bearing, the bearing comprising a sleeve (12), a fixed bushing (18) and a roll neck (14), in which the sleeve (12) is mounted on the roll neck (14) for rotation therewith, the sleeve is journalled for rotation in the fixed bushing (18), and a flow of oil exits from between the sleeve (12) and the bushing ( 18), said seal comprising: a flexible circular seal body (25) adapted to be mounted on and to rotate with the roll neck (14); **characterised in that** the seal further comprises circumferentially spaced impellers (42) projecting from said seal body (25), said impellers (42) are rotatable with said seal body (25), wherein:
- said impellers (42) rotatively propel oil exiting from between the sleeve (12) and bushing (18);
- an annular flinger (36) projects angularly from an end face (25') of said seal body (25), and wherein said impellers (42) project axially from a junction of said end face (25') with said flinger flange.

2. The seal and the bearing of claim 1, wherein said impellers (42) harness the rotating kinetic energy of said seal (24) to exert a pumping action which forcibly ejects a flow of oil exiting from between the sleeve and the bushing.

3. The seal and the bearing of claim 1 or 2 wherein, surfaces of the thus mounted seal body (25) coacts with surfaces of other bearing components to define an annular chamber (40) arranged to receive said exiting flow of oil, and wherein said impellers (42) serve to rotatively propel oil received in said chamber (40).

4. The seal and the bearing of anyone of claims 1 to 3, wherein said impellers (42) are integrally molded components of said seal body (25).

5. The seal and the bearing of anyone of claims 1 to 4, further comprising:
axially spaced annular flanges (32a,32b) projecting radially outwardly from said seal body (25);
an end face (25') on said seal body (25);
the annular flinger (36) projecting from said seal body (25) at an acute angle with respect to one of said annular flange (32b); and
said circumferentially spaced impellers (42) projecting axially from said seal body (25) at a juncture of said flinger (36) and said end face(25').

6. The seal and the bearing of claim 5 wherein the circumferential spacing (s) between said impellers (42) is between about 4.9 to 39.3% of the outside diameter (D) of said seal body.

7. Use of a seal in a rolling mill oil film bearing (10) in which a sleeve (12) is mounted on a roll neck (14) for rotation therewith, the sleeve is journalled for rotation in a fixed bushing (18), and a flow of oil exits from between the sleeve (12) and the bushing(18), said seal comprising: a flexible circular seal body (25) adapted to be mounted on and to rotate with the roll neck (14);
**characterised in that** the seal further comprises circumferentially spaced impellers (42) projecting from said seal body (25), wherein said impellers (42) rotate with said seal body (25) and rotatively propel oil exiting from between the sleeve (12) and bushing (18).

## Patentansprüche

1. Dichtung und Lager (10) zur Verwendung in einem Walzwerkölfilmlager, wobei das Lager eine Hülse (12), eine feststehende Buchse (18) und einen Walzenzapfen (14) aufweist, in dem die Hülse (12) am Walzenzapfen (14) zur Rotation damit angebracht ist, wobei die Hülse zur Rotation in der feststehenden Buchse (18) zapfengelagert ist, und ein Ölfluss zwischen der Hülse (12) und der Buchse (18) austritt, wobei die Dichtung Folgendes umfasst:
einen flexiblen kreisförmigen Dichtungskörper (25), der eingerichtet ist, an dem Walzenzapfen (14) angebracht zu werden und sich mit ihm zu drehen;
**dadurch gekennzeichnet, dass** die Dichtung ferner aufweist in Umfangsrichtung beabstandete Flügel (42), die vom Dichtungskörper (25) vorstehen, wobei die Flügel (42) mit dem Dichtungskörper (25) drehbar sind, wobei:
- die Flügel (42) rotierend Öl antreiben, das zwischen der Hülse (12) und der Buchse (18) austritt;
- ein ringförmiger Schleuderer (36) winklig von einer Endfläche (25') des Dichtungskörpers (25) vorsteht, und wobei die Flügel (42) axial von einer Verbindungsstelle der Endfläche (25') mit dem Schleudererflansch vorsteht.

2. Dichtung und Lager nach Anspruch 1, wobei die Flügel (42) die kinetische Rotationsenergie der Dichtung (24) nutzen, um einen Pumpwirkung auszuüben, die zwangsweise einen Ölfluss ausstößt, der zwischen dem Hülse und der Buchse austritt.

3. Dichtung und Lager nach Anspruch 1 oder 2, wobei Oberflächen des so angebrachten Dichtungskörpers (25) mit Oberflächen der anderen Lagerkomponenten zusammenarbeiten, um eine ringförmige Kammer (40) zu definieren, die eingerichtet ist, den austretenden Ölfluss aufzunehmen, und wobei die Flügel (42) dazu dienen, rotierend Öl anzutreiben, das in der Kammer (40) aufgenommen wird.

4. Dichtung und Lager nach einem der Ansprüche 1 bis 3, wobei die Flügel (42) integral geformte Komponenten des Dichtungskörpers (25) sind.

5. Dichtung und Lager nach einem der Ansprüche 1 bis 4, die ferner aufweisen:
axial beabstandete ringförmige Flansche (32a,32b), die aus dem Dichtungskörper (25) radial nach außen vorstehen;
eine Endfläche (25') am Dichtungskörper (25);
den ringförmigen Schleuderer (36), der vom Dichtungskörper (25) bezüglich eines der ringförmigen Flansche (32b) unter einem spitzen Winkel vorsteht; und
die in Umfangsrichtung beabstandeten Flügel (42), die vom Dichtungskörper (25) an einer Verbindungsstelle des Schleuderers (36) und der Endfläche (25') axial vorstehen.

6. Dichtung und Lager nach Anspruch 5, wobei der Umfangsabstand (die Umfangsabstände) zwischen den Flügeln (42) zwischen etwa 4,9 und 39,3% des Außendurchmessers (D) des Dichtungskörpers beträgt (betragen).

7. Verwendung einer Dichtung in einen Walzwerkölfilmlager (10), in dem eine Hülse (12) an einem Walzenzapfen (14) zur Rotation damit befestigt ist, wobei die Hülse zur Rotation in einer feststehenden Buchse (18) zapfengelagert ist, und ein Ölfluss zwischen der Hülse (12) und der Buchse (18) austritt, wobei die Dichtung Folgendes umfasst: einen flexiblen kreisförmigen Dichtungskörper (25), der eingerichtet ist, an dem Walzenzapfen (14) angebracht zu werden und sich mit ihm zu drehen;
**dadurch gekennzeichnet, dass** die Dichtung ferner aufweist in Umfangsrichtung beabstandete Flügel (42), die vom Dichtungskörper (25) vorstehen, wobei
sich die Flügel (42) mit dem Dichtungskörper (25) drehen und rotierend Öl antreiben, das zwischen der Hülse (12) und der Buchse (18) austritt.

## Revendications

1. Joint et palier (10) destinés à être utilisés dans un palier à film d'huile de laminoir, le palier comprenant un manchon (12), une douille fixe (18) et un tourillon (14), dans lequel le manchon (12) est monté sur le tourillon (14) pour tourner avec celui-ci, le manchon est supporté d'une manière permettant sa rotation dans la douille fixe (18) et un écoulement d'huile sort d'entre le manchon (12) et la douille (18), ledit joint comportant : un corps de joint circulaire souple (25) conçu pour être monté sur le tourillon (14) et tourner avec celui-ci ;
**caractérisés en ce que** le joint comporte, en outre :
des ailettes (42) espacées circonférentiellement dépassant dudit corps de joint (25),
lesdites ailettes (42) peuvent tourner avec ledit corps de joint (25),
- lesdites ailettes (42) projetant par rotation l'huile qui sort d'entre le manchon (12) et la douille (18) ;
- un déflecteur annulaire (36) dépassant de manière angulaire d'une face d'extrémité (25') dudit corps de joint (25), et lesdites ailettes (42) dépassant axialement à partir d'une jonction de ladite face d'extrémité (25') avec ladite bride déflectrice.

2. Joint et palier selon la revendication 1, lesdites ailettes (42) captant l'énergie cinétique de rotation dudit joint (24) pour exercer une action de pompage qui éjecte par la force un écoulement d'huile sortant d'entre le manchon et la douille.

3. Joint et palier selon la revendication 1 ou 2, des surfaces du corps de joint (25) ainsi monté coopérant avec des surfaces d'autres composants de palier pour définir une chambre annulaire (40) conçue pour recevoir ledit écoulement d'huile sortant, et lesdites ailettes (42) servant à projeter par rotation l'huile reçue dans ladite chambre (40).

4. Joint et palier selon l'une quelconque des revendications 1 à 3, lesdites ailettes (42) étant des composants moulés d'une seule pièce dudit corps de joint (25).

5. Joint et palier selon l'une quelconque des revendications 1 à 4, comprenant, en outre :
des brides annulaires (32a, 32b) espacées axialement dépassant radialement vers l'extérieur dudit corps de joint (25) ;
une face d'extrémité (25') sur ledit corps de joint (25) ;
le déflecteur annulaire (36) dépassant dudit corps de joint (25) en formant un angle aigu par rapport à l'une (32b) desdites brides annulaires ; et
lesdites ailettes (42) espacées circonférentiellement dépassant axialement dudit corps de joint (25) au niveau d'une jonction dudit déflecteur (36) et de ladite face d'extrémité (25').

6. Joint et palier selon la revendication 5, l'espacement circonférentiel(s) entre lesdites ailettes (42) mesurant d'environ 4,9% à 39,3% du diamètre extérieur (D) dudit corps de joint.

7. Utilisation d'un joint dans un palier (10) à film d'huile de laminoir, dans lequel un manchon (12) est monté sur un tourillon (14) pour tourner avec celui-ci, le manchon est supporté d'une manière permettant sa rotation dans une douille fixe (18) et un écoulement d'huile sort d'entre le manchon (12) et la douille (18), ledit joint comportant :
un corps de joint circulaire souple (25) conçu pour être monté sur le tourillon (14) et tourner avec celui-ci ;
**caractérisée en ce que** le joint comporte, en outre :
des ailettes (42) espacées circonférentiellement dépassant dudit corps de joint (25),
lesdites ailettes (42) tournant avec ledit corps de joint (25) et projetant par rotation l'huile qui sort d'entre le manchon (12) et la douille (18).
